# EUROPÄISCHE PATENTANMELDUNG

(11) **EP 4 012 312 A1**
(43) Veröffentlichungstag der Anmeldung: **15.06.2022**
(21) Anmeldenummer: 20213373.2
(22) Anmeldetag: 11.12.2020
(51) Int. Cl.: F27B 21/00, F27D 15/02, F27D 17/00

(54) **ENERGIERÜCKGEWINNUNG UND GASREINIGUNG AM SINTERKÜHLER**

(71) Anmelder: Primetals Technologies Austria GmbH, 4031 Linz (AT)
(72) Erfinder: Hammer, Christian Friedrich, 4040 Linz (AT); Haselgrübler, Manfred, 4048 Puchenau (AT); Viehböck, Christoph Alexander, 4073 Wilhering (AT)
(74) Vertreter: Metals@Linz

(57) **Zusammenfassung**

Verfahren zum Betrieb eines Sinterkühlers (20) mit einem vorderen Abschnitt (50), einem hinteren Abschnitt (70) und einem mittleren Abschnitt (60), auf dem eine Schicht von Sintermaterial mittels Durchblasens von Kühlgas gekühlt wird, und Kühlgas, das in einem Abschnitt des Sinterkühlers (20) bereits durch das Sintermaterial geblasen wurde, zumindest teilweise einem anderen Abschnitt des Sinterkühlers (20) als rezirkuliertes Kühlgas zugeführt wird, wobei das rezirkulierte Kühlgas aus dem mittleren Abschnitt (60) des Sinterkühlers (20) stammt, das rezirkulierte Kühlgas dem vorderen Abschnitt (50) des Sinterkühlers (20) als Kühlgas zugeführt wird, und zumindest einer Teilmenge des in dem vorderen Abschnitt (50) durch die Schicht geblasenem und dabei erwärmtem Kühlgases Wärme entzogen wird und danach seine Staubfracht vermindert wird. Sinteranlage, die entsprechend ausgeführt ist.

## Beschreibung

### Gebiet der Technik

Die Erfindung betrifft ein Verfahren zum Betrieb eines Sinterkühlers mit einem vorderen Abschnitt, einem hinteren Abschnitt und einem mittleren Abschnitt, auf dem eine Schicht von Sintermaterial mittels Durchblasens von Kühlgas gekühlt wird, und Kühlgas, das in einem Abschnitt des Sinterkühlers bereits durch das Sintermaterial geblasen wurde, zumindest teilweise einem anderen Abschnitt des Sinterkühlers als rezirkuliertes Kühlgas zugeführt wird. Sie betrifft auch eine entsprechende Sinteranlage.

### Stand der Technik

Da von einer Sintermaschine nach Abschluss des Sinterprozesses abgeworfenes Material eine Temperatur hat, die bezügliche weiterer Verarbeitung problematisch ist - beispielsweise können Transportvorrichtungen durch heißes abrasives Material besonders starkem Verschleiß unterliegen - , ist es üblich, mittels eines Sinterkühlers eine Temperaturverminderung vorzunehmen, bevor weitere Verarbeitungsschritte erfolgen. Üblicherweise wird zur Kühlung ein gasförmiges Kühlmedium - beispielsweise Luft - durch das Material geblasen, wobei das Material auf linearen oder runden Transportvorrichtungen von einem Aufgabeort zu einem Abwurfort transportiert wird. Bei der Kühlung wird eine Abwurftemperatur angestrebt, die temperaturbedingte Probleme in späteren Behandlungsschritten vermindert.

Die zur Kühlung verwendete Luft reißt beim Durchströmen des abzukühlenden Materials kleine Partikel mit und ist daher nach dem Durchströmen entsprechend staubbeladen. Um diese Luft in die Umwelt entlassen zu können, muss diese Staubfracht weitgehend entfernt werden.

Nach dem Durchströmen des abzukühlenden Materials ist das zur Kühlung verwendete Kühlmedium erhitzt. Ökonomisch und ökologisch ist es sinnvoll, die großen dem Sinter entzogenen Energiemengen einer Nutzung zuzuführen. Dazu wird die in dem erhitzten Kühlmedium enthaltene Energie auf andere Medien übertragen.

Je größer die zur Kühlung durch das abzukühlende Material geleiteten Volumina sind, desto größer beziehungsweise stärker müssen die zur Entstaubung und Wärmerückgewinnung vorgesehenen Anlagenteile wie beispielsweise Rohrleitungen, Filter, Gebläse ausgelegt sein. Dazu trägt auch die durch Temperaturerhöhung stattfindende Volumenexpansion des zugeführten Kühlmediums bei. Bei großen Volumina sinkt aber auch die Temperatur, welche das Kühlmedium nach dem Abkühlvorgang des Sinters aufweist - dadurch wird spätere Rückgewinnung von Wärme in Form von Übertragung auf ein anderes Medium ineffizient oder ist oft auch gar nicht mehr möglich.
Es ist vorteilhaft, möglichst kleine Volumina zur Kühlung zu nutzen, da entsprechend Platzbedarf und Errichtungs- und Betriebskosten geringer sind als bei größeren Volumina. Zudem kann Energierückgewinnung umso effizienter stattfinden, je höher die Temperatur des erhitzten Kühlmediums ist. Andererseits steigt mit abnehmenden Volumina des Kühlmediums die Abwurftemperatur des Sinters nach dem Kühler an.

Rezirkulation von bereits zur Kühlung verwendeten erhitzten Volumina zur weiteren Abkühlung vermindert zwar einerseits die zu reinigenden Volumina und aufgrund einer Filterwirkung des durchströmten Sintermaterials auch die Staubfracht und damit die notwendigen Filtergrößen, benötigt aber baulichen und energetischen Zusatzaufwand für die aufgrund der erhöhten Temperatur der rezirkulierten Luft großen zu rezirkulierenden Volumina. Zudem ergibt sich aufgrund verminderter Kühlwirkung eine Erhöhung der Abwurftemperatur bei höherer Temperatur der das Material durchströmenden Luft - entsprechend müsste die Kühlfläche vergrößert werden, um die gewünschte Abwurftemperatur zu erzielen. Bei bestehenden Anlagen sind solche Vergrößerungen oft, beispielsweise aus Platzgründen, nicht möglich. Bei der Auslegung von Neuanlagen führen sie unter Umständen zu übermäßig großem Platzbedarf.

Es besteht Bedarf an einer Lösung, die einen technisch und ökonomisch sinnvollen Ausgleich der widerstreitenden Interessen an hoher Temperatur bei der Wärmerückgewinnung, geringer Gasmenge zur Entstaubung - mit entsprechend geringem Bedarf an Filterfläche - bei geringer Abwurftemperatur und geringem Platzbedarf erlaubt.

### Zusammenfassung der Erfindung

### Technische Aufgabe

Es ist die Aufgabe der Erfindung, Verfahren und Vorrichtung für eine weitgehend ausgeglichene Lösung bereitzustellen.

### Technische Lösung

Diese Aufgabe wird gelöst durch ein Verfahren zum Betrieb eines Sinterkühlers mit einem vorderen Abschnitt, einem hinteren Abschnitt und einem mittleren Abschnitt, auf dem eine Schicht von Sintermaterial mittels Durchblasens von Kühlgas gekühlt wird,
und Kühlgas, das in einem Abschnitt des Sinterkühlers bereits durch das Sintermaterial geblasen wurde, zumindest teilweise einem anderen Abschnitt des Sinterkühlers als rezirkuliertes Kühlgas zugeführt wird,
dadurch gekennzeichnet, dass
das rezirkulierte Kühlgas aus dem mittleren Abschnitt des Sinterkühlers stammt,
das rezirkulierte Kühlgas dem vorderen Abschnitt des Sinterkühlers als Kühlgas zugeführt wird,
und zumindest einer Teilmenge des in dem vorderen Abschnitt durch die Schicht geblasenem und dabei erwärmtem Kühlgases Wärme entzogen wird und danach seine Staubfracht vermindert wird.

Die Abschnitte betreffen die Erstreckung des Sinterkühlers von einem Aufgabebereich zu einem Abwurfbereich, wo das gekühlte Sintermaterial vom Sinterkühler abgeworfen wird, bevorzugt mit einer Temperatur von beispielsweise unter 100 °C. Der Sinterkühler kann ein linearer Sinterkühler sein oder ein runder Sinterkühler. Bei einem linearen Sinterkühler befindet sich der Abwurfbereich am Abwurfende, und der Aufgabebereich für den Aufbau der Schicht des Sintermaterials befindet sich am Aufgabeende. Bei einem runden Sinterkühler, der keine Enden besitzt, sind der für den Aufbau der Schicht des Sintermaterials von Sintermaterial vorgesehene Aufgabebereich und der Abwurfbereich zwei Bereiche seiner Erstreckung.
Der mittlere Abschnitt befindet sich zwischen dem vorderen Abschnitt und dem hinteren Abschnitt. Entlang der Erstreckung des Sinterkühlers vom Aufgabebereich über den mittleren Abschnitt zum Abwurfbereich gesehen liegt der vordere Abschnitt vor dem hinteren Abschnitt; bei dieser Sicht liegt der vordere Abschnitt näher zum Aufgabebereich, während der hintere Abschnitt näher zum Abwurfbereich liegt.

In dem vorderen Abschnitt durch die Schicht geblasenem und dabei erwärmtem Kühlgas wird Wärme entzogen, um Energie zurückzugewinnen. Das erfolgt beispielsweise dadurch, dass Wärme auf ein anderes Medium übertragen wird, wie beispielsweise auf Wasser, beispielsweise zwecks Heißwassererzeugung oder zur Dampferzeugung - beispielsweise zur Herstellung von Sattdampf oder überhitztem Dampf.

Das Kühlgas ist bevorzugt Luft; beispielsweise Luft mit Umgebungstemperatur.

Im mittleren und hinteren Abschnitt wird Kühlgas verwendet, das noch keine Wärme aus dem Sintermaterial aufgenommen hat - es handelt sich also nicht um rezirkuliertes Kühlgas.

Die Staubfracht wird beispielsweise auf einen behördlich vorgegebenen Wert vermindert; beispielsweise auf einen Wert kleiner 10 mg/Nm³.

### Vorteilhafte Wirkungen der Erfindung

Die Erfindung erlaubt es einerseits, eine gewünschte Abwurftemperatur sicherzustellen durch eine Kühlung mit Kühlgas niedriger Temperatur im mittleren und hinteren Abschnitt. Andererseits erlaubt es die Rezirkulierung, die der Wärmerückgewinnung und der Filterung zugeführten Volumina geringer zu halten als bei Verfahrensführung ohne Rezirkulierung. Die Ausdehnung der Abschnitte ist so gewählt, dass auf eine Filterung des aus dem hinteren Abschnitt abgeführten Kühlgases verzichtet werden kann - dort ist die Staubbelastung so gering, dass die Entlassung in die Umwelt unbedenklich ist. Wärmerückgewinnung ist für aus dem hinteren Abschnitt abgeführtes Kühlgas ineffizient aufgrund seiner geringen Temperatur.

Die Ausdehnung der Abschnitte ist so gewählt, dass die Wärmerückgewinnung aus dem aus dem vorderen Abschnitt abgeführten Kühlgas auch hinsichtlich des Aufwandes für die Rezirkulierung ökonomisch sinnvoll und damit ressourcen- und umweltschonend ist.

Die erfindungsgemäße Lösung erlaubt es, bestehende Sinteranlagen im Rahmen bestehender Rahmenbedingungen bezüglich des Platzes ressourcen- und umweltschonender zu betreiben. Neuanlagen können mit geringem Platzbedarf für ressourcen- und umweltschonenden Betrieb ausgelegt werden.

Bevorzugt wird in dem hinteren Abschnitt des Sinterkühlers durch die Schicht geblasenes Kühlgas zumindest teilweise direkt in die Umwelt entlassen.
Die Entlassung in die Umwelt im hinteren Abschnitt findet direkt, das heißt ohne Entstaubung und ohne Entzug von Wärme zur Energierückgewinnung, statt.

Nach einer vorteilhaften Variante gilt für den mittleren Abschnitt, dass er innerhalb eines Bereiches von 20 bis 50 %, bevorzugt von 30 bis 40 %, der Erstreckung des Sinterkühlers von einem Aufgabebereich zu einem Abwurfbereich beginnt, und innerhalb eines Bereiches von 40 bis 80 %, bevorzugt von 50 bis 70 %, der Erstreckung des Sinterkühlers von einem Aufgabebereich zu einem Abwurfbereich endet.

Nach einer vorteilhaften Variante gilt für den vorderen Abschnitt, dass er innerhalb eines Bereiches von 0 bis 25 %, bevorzugt von 0 bis 15 %, der Erstreckung des Sinterkühlers von einem Aufgabebereich zu einem Abwurfbereich beginnt, und innerhalb eines Bereiches von 20 bis 50 %, bevorzugt von 30 bis 40 %, der Erstreckung des Sinterkühlers von einem Aufgabebereich zu einem Abwurfbereich endet. Mit einem Beginn bei 0 % der Längserstreckung ist gemeint, dass der vordere Abschnitt dort beginnt, wo der Aufgabebereich beginnt.

Nach einer vorteilhaften Variante des Verfahrens wird eine Teilmenge des in dem vorderen Abschnitt durch die Schicht geblasenem und dabei erwärmtem Kühlgases zur Vorwärmung von Verbrennungsluft für einen Zündofen einer Sinteranlage verwendet; bevorzugt stammt die Teilmenge aus einer vorderen, nahe beim Aufgabebereich liegenden Region des vorderen Abschnitts, aufgrund der dort vorliegenden besonders hohen Temperatur. Es kann sich dabei um die Sinteranlage handeln, die das vom Sinterkühler zu kühlende Material liefert.

Nach einer vorteilhaften Variante gilt für den hinteren Abschnitt, dass er innerhalb eines Bereiches von 40 bis 80 %, bevorzugt von 50 bis 70 %, der Erstreckung des Sinterkühlers von einem Aufgabebereich zu einem Abwurfbereich beginnt, und innerhalb eines Bereiches von 90 bis 100 %, bevorzugt bei 100 %, der Erstreckung des Sinterkühlers von einem Aufgabebereich zu einem Abwurfbereich endet. Mit einem Ende bei 100 % der Längserstreckung ist gemeint, dass der hintere Abschnitt mit dem Ende des Abwurfbereichs endet.

Die Abschnitte sind durch Trennvorrichtungen wie beispielsweise Trennwände voneinander abgegrenzt; die Trennvorrichtungen definieren die Grenzen, also Anfang und Ende, der Abschnitte.
Vorzugsweise sind die Grenzen der Abschnitte variabel einstellbar, um beispielsweise verschiedenen Bedingungen wie Art und Temperatur des Sintermaterials oder Temperatur des Kühlgases entsprechend bezüglich des angestrebten Ausgleichs optimale Einstellungen vornehmen zu können. Das kann beispielsweise durch verschiebbare Trennvorrichtungen ermöglicht werden.

Nach einer vorteilhaften Variante wird einer ersten Teilmenge des in dem vorderen Abschnitt durch die Schicht geblasenen und dabei erwärmten Kühlgases Wärme entzogen in einem Überhitzer zur Überhitzung von Dampf, und einer zweiten Teilmenge des in dem vorderen Abschnitt durch die Schicht geblasenen und dabei erwärmten Kühlgases Wärme entzogen in einem Abhitzekessel zur Erzeugung von Dampf und/oder in einer Vorrichtung zur Fluiderhitzung. Das Fluid ist beispielsweise Wasser oder Thermoöl; bevorzugt ist es eine Flüssigkeit. Die Vorrichtung zur Fluiderhitzung ist beispielsweise ein Heißwassererzeuger oder eine Vorrichtung zur Erhitzung von Thermoöl.
Bei dem Dampf kann es sich beispielsweise um Sattdampf handeln.
Nach einer Variante wird dem aus dem Abhitzekessel austretenden Gas in einer nachgeschalteten Vorrichtung zur Fluiderhitzung verbliebene Wärme entzogen. Beispielsweise kann so Heißwasser erzeugt oder Thermoöl erhitzt werden. Nach einer vorteilhaften Ausführungsform wird zumindest ein Teil der ersten Teilmenge nach Durchlaufen des Überhitzers mit der zweiten Teilmenge vereinigt, bevor diese den Abhitzekessel und/oder die Vorrichtung zur Fluiderhitzung durchläuft. Somit kann nach der Überhitzung in der ersten Teilmenge verbliebene Wärme im Abhitzekessel und/oder der Vorrichtung zur Fluiderhitzung genutzt werden.

Der Dampf, der im Überhitzer überhitzt wird, kann aus dem Abhitzekessel stammen, oder aus einer anderen Quelle. Vorzugsweise wird in dem Überhitzer Dampf aus dem Abhitzekessel überhitzt.

Vorzugsweise stammt die erste Teilmenge aus einem ersten Teilbereich des vorderen Abschnitts, wobei der erste Teilbereich dem aufgabebereichseitigen Ende des vorderen Abschnitts benachbart ist, und stammt die zweite Teilmenge aus einem zweiten Teilbereich des vorderen Abschnitts, wobei der zweite Teilbereich zwischen dem ersten Teilbereich und dem abwurfseitigen Ende des vorderen Abschnitts liegt.

Vorzugsweise nimmt der erste Teilbereich bis zu 50 % der Erstreckung des vorderen Abschnitts ein.

Vorzugsweise nimmt der zweite Teilbereich 50 % oder mehr der Erstreckung des vorderen Abschnitts ein.

Die Teilbereiche sind durch Trennvorrichtungen wie beispielsweise Trennwände voneinander abgegrenzt; die Trennvorrichtungen definieren die Grenzen, also Anfang und Ende, der Teilbereiche.
Vorzugsweise sind die Grenzen der Teilbereiche variabel einstellbar, um beispielsweise verschiedenen Bedingungen wie Art und Temperatur des Sintermaterials oder Temperatur des Kühlgases entsprechend bezüglich des angestrebten Ausgleichs optimale Einstellungen vornehmen zu können. Das kann beispielsweise durch verschiebbare Trennvorrichtungen ermöglicht werden.

Nach einer anderen Ausführungsform wird dem gesamten in dem vorderen Abschnitt durch die Schicht geblasenen und dabei erwärmten Kühlgas - oder zumindest einer Teilmenge des in dem vorderen Abschnitt durch die Schicht geblasenen und dabei erwärmten Kühlgases - Wärme entzogen in einem Abhitzekessel zur Erzeugung von Dampf und/oder in einer Vorrichtung zur Fluiderhitzung, ohne dass einer Teilmenge des in dem vorderen Abschnitt durch die Schicht geblasenen und dabei erwärmten Kühlgases Wärme entzogen wird in einem Überhitzer zur Überhitzung von Dampf. Das Fluid ist beispielsweise Wasser oder Thermoöl; bevorzugt ist es eine Flüssigkeit. Die Vorrichtung zur Fluiderhitzung ist beispielsweise ein Heißwassererzeuger oder eine Vorrichtung zur Erhitzung von Thermoöl.
Bei dem Dampf kann es sich beispielsweise um Sattdampf handeln.
Nach einer Variante wird dem aus dem Abhitzekessel austretenden Gas in einer nachgeschalteten Vorrichtung zur Fluiderhitzung verbliebene Wärme entzogen. Beispielsweise kann so Heißwasser erzeugt oder Thermoöl erhitzt werden.

Ein erfindungsgemäßes Verfahren lässt sich sowohl bei Neuanlagen verwirklichen als auch bei bestehenden Anlagen, gegebenenfalls nach Durchführung entsprechender Umbaumaßnahmen.

Die erfindungsgemäße Verfahrensweise bietet mehrere Vorteile. Beispielsweise werden Wärmerückgewinnung und Gasreinigung optimiert.
Beispielsweise wird durch die Rezirkulation die Temperatur des Gases, aus dem Wärme entzogen wird, erhöht, während die zu entstaubende Gasmenge gering gehalten wird, und die Abwurftemperatur des Sinters trotzdem gewährleistet ist, weil die nicht mit rezirkulierter Kühlluft gekühlten Bereiche mit Kühlgas niedrigerer Temperatur beaufschlagt werden.

Beispielsweise kommt man im Vergleich zu bekannten Verfahrensweisen mit kleineren Vorrichtungen zur Verminderung der Staubfracht beziehungsweise mit geringerer Filterfläche aus, da ein geringeres Gasvolumen zu entstauben ist; auch bezüglich Gebläsen zur Gasförderung können Einsparungen erzielt werden.
Beispielsweise erlaubt das erfindungsgemäße Verfahren beim Entzug von Wärme aus dem im vorderen Abschnitt durch die Schicht geblasenem und dabei erwärmtem Kühlgas bei gleicher Fläche eines Abhitzekessels einen höheren Wärmeaustrag; bei vielen bestehenden Sinterkühlern erlaubt erst das eine wirtschaftliche Dampferzeugung. Aufgrund geringerer Gasvolumina und höherer Temperaturen kann auch mit geringeren Flächen ausgekommen werden beziehungsweise lassen sich höherer Dampfdruck und höhere Überhitzungstemperaturen erzielen, was beispielsweise bei nachfolgender Stromerzeugung vorteilhaft ist.
Beispielsweise erlaubt die erfindungsgemäße Verfahrensweise, die Abwurftemperatur des Sinters trotz Rezirkulation genügend niedrig zu halten. Das ist beispielsweise vorteilhaft, wenn bei bestehenden Anlagen die Kühlfläche zu klein ist, um mit bekannten Rezirkulationsverfahren noch eine genügend tiefe Abwurftemperatur zu erzielen. Das ist beispielsweise vorteilhaft, wenn bei neu geplanten Anlagen mit bekannten Rezirkulationsverfahren die Kühlfläche zur Erzielung einer genügend tiefen Abwurftemperatur unverhältnismäßig groß ausgelegt werden müsste.
Bei vergleichsweise höherem Wärme-Output durch den Entzug von Wärme lässt sich das erfindungsgemäße Verfahren mit geringerem baulichen, apparativen und finanziellen Aufwand durchführen, beispielsweise aufgrund der möglichen Einsparungen bei der Bauweise des Filters und bei Gebläsen.

Ein weiterer Gegenstand der vorliegenden Anmeldung ist eine Sinterkühleranlage, umfassend
- einen Sinterkühler mit Durchblasvorrichtungen für Kühlgas, wobei der Sinterkühler einen vorderen Abschnitt, einen mittleren Abschnitt, und einen hinteren Abschnitt aufweist,
- zumindest eine Vorrichtung zur Zuführung von durch den mittleren Abschnitt des Sinterkühlers geblasenem Kühlgas zum vorderen Abschnitt des Sinterkühlers,
dadurch gekennzeichnet, dass
die Sinterkühleranlage auch umfasst
- zumindest eine Vorrichtung zum Entzug von Wärme aus durch den vorderen Abschnitt geblasenem Kühlgas,
- zumindest eine Vorrichtung zur Verminderung der Staubfracht von aus der Vorrichtung zum Entzug von Wärme austretendem Kühlgas.

So eine Sinterkühleranlage ist geeignet zur Durchführung eines erfindungsgemäßen Verfahrens.

Es kann sich um einen linearen Sinterkühler handeln oder um einen runden Sinterkühler.

Nach einer vorteilhaften Ausführung ist die Sinterkühleranlage zur direkten Entlassung von durch den hinteren Abschnitt des Sinterkühlers geblasenem Kühlgas in die Umwelt geeignet. Unter direkter Entlassung in die Umwelt ist eine Entlassung in die Umwelt ohne Entstaubung und ohne Entzug von Wärme zur Energierückgewinnung zu verstehen. Die Sinterkühleranlage ist geeignet, durch den hinteren Abschnitt des Sinterkühlers geblasenes Kühlgas direkt in die Umwelt zu entlassen - dazu kann beispielsweise der hintere Abschnitt nach oben offen sein. Es können aber auch Leitungen vorhanden sein, die das Kühlgas aus dem hinteren Abschnitt vom Sinterkühler weg zu einem Auslass in die Umwelt, beispielsweise einen Kamin, leiten.

Die Durchblasvorrichtungen, beispielsweise Gebläse, sind bevorzugt steuer- und/oder regelbar bezüglich des Volumenfluss. Die Durchblasvorrichtungen sind beispielsweise derartig steuer- und/oder regelbare Gebläse.

Nach einer vorteilhaften Variante gilt für den mittleren Abschnitt, dass er innerhalb eines Bereiches von 20 bis 50 %, bevorzugt von 30 bis 40 %, der Erstreckung des Sinterkühlers von einem Aufgabebereich zu einem Abwurfbereich beginnt, und innerhalb eines Bereiches von 40 bis 80 %, bevorzugt von 50 bis 70 %, der Erstreckung des Sinterkühlers von einem Aufgabebereich zu einem Abwurfbereich endet.
Nach einer vorteilhaften Variante gilt für den vorderen Abschnitt, dass er innerhalb eines Bereiches von 0 bis 25 %, bevorzugt von 0 bis 15 %, der Erstreckung des Sinterkühlers von einem Aufgabebereich zu einem Abwurfbereich beginnt, und innerhalb eines Bereiches von 20 bis 50 %, bevorzugt von 30 bis 40 %, der Erstreckung des Sinterkühlers von einem Aufgabebereich zu einem Abwurfbereich endet.
Nach einer vorteilhaften Variante gilt für den hinteren Abschnitt, dass er innerhalb eines Bereiches von 40 bis 80 %, bevorzugt von 50 bis 70 %, der Erstreckung des Sinterkühlers von einem Aufgabebereich zu einem Abwurfbereich beginnt, und innerhalb eines Bereiches von 90 bis 100 %, bevorzugt bei 100 %, der Erstreckung des Sinterkühlers von einem Aufgabebereich zu einem Abwurfbereich endet.

Die Abschnitte sind durch Trennvorrichtungen wie beispielsweise Trennwände voneinander abgegrenzt; die Trennvorrichtungen definieren die Grenzen, also Anfang und Ende, der Abschnitte. Sie dienen der Leitung des in einem Abschnitt aus dem zu kühlenden Material austretenden Kühlgases nach oben bei weitgehender Vermeidung einer Vermischung mit Kühlgas aus einem seitlich benachbarten Abschnitt.

Vorzugsweise sind die Grenzen der Abschnitte variabel einstellbar. Das ist günstig, um beispielsweise verschiedenen Bedingungen wie Art und Temperatur des Sintermaterials oder Temperatur des Kühlgases entsprechend bezüglich des angestrebten Ausgleichs optimale Einstellungen vornehmen zu können. Das kann beispielsweise durch variabel einstellbare, beispielsweise verschiebbare, Trennvorrichtungen ermöglicht werden.

Der Entzug von Wärme erfolgt zwecks Energierückgewinnung. Nach einer vorteilhaften Variante umfasst die Vorrichtung zum Entzug von Wärme aus durch den vorderen Abschnitt geblasenem Kühlgas
- einen Abhitzekessel, in den eine vom vorderen Abschnitt ausgehende Abhitzegasleitung zur Zufuhr von durch den vorderen Abschnitt geblasenem Kühlgas mündet,
   und/oder
- eine Vorrichtung zur Fluiderhitzung, in die eine vom vorderen Abschnitt ausgehende Fluiderhitzergasleitung zur Zufuhr von durch den vorderen Abschnitt geblasenem Kühlgas und/oder in die eine vom Abhitzekessel ausgehende Kesselableitung zur Zufuhr von aus dem Abhitzekessel austretenden Kühlgas mündet,
   und/oder
- einen Überhitzer, in den eine vom vorderen Abschnitt ausgehende Überhitzergasleitung zur Zufuhr von durch den vorderen Abschnitt geblasenem Kühlgas mündet.

Das Fluid ist beispielsweise Wasser oder Thermoöl; bevorzugt ist es eine Flüssigkeit. Die Vorrichtung zur Fluiderhitzung ist beispielsweise ein Heißwassererzeuger oder eine Vorrichtung zur Erhitzung von Thermoöl.
Bei dem Dampf kann es sich beispielsweise um Sattdampf handeln.

Wenn ein Abhitzekessel und/oder eine Vorrichtung zur Fluiderhitzung sowie gleichzeitig ein Überhitzer vorhanden sind, kann einer ersten Teilmenge des in dem vorderen Abschnitt durch die Schicht geblasenem und dabei erwärmtem Kühlgases in dem Abhitzekessel zur Erzeugung von Dampf und/oder in der Vorrichtung zur Fluiderhitzung Wärme entzogen werden, und einer zweiten Teilmenge des in dem vorderen Abschnitt durch die Schicht geblasenem und dabei erwärmtem Kühlgases in einem Überhitzer zur Überhitzung von Dampf Wärme entzogen werden. Wenn ein Abhitzekessel und/oder eine Vorrichtung zur Fluiderhitzung sowie gleichzeitig ein Überhitzer vorhanden sind, kann zumindest ein Teil der ersten Teilmenge nach Durchlaufen des Überhitzers mit der zweiten Teilmenge vereinigt werden, bevor diese den Abhitzekessel und/oder die Vorrichtung zur Fluiderhitzung durchläuft; dafür kann eine vom Überhitzer ausgehende Überhitzerableitung vorgesehen sein, die in die vom vorderen Abschnitt ausgehende Abhitzegasleitung und/oder die Kesselableitung mündet. Somit kann nach der Überhitzung in der ersten Teilmenge verbliebene Wärme im Abhitzekessel und/oder der Vorrichtung zur Fluiderhitzung genutzt werden.

Wenn ein Abhitzekessel, in den eine vom vorderen Abschnitt ausgehende Abhitzegasleitung zur Zufuhr von durch den vorderen Abschnitt geblasenem Kühlgas mündet, und eine Vorrichtung zur Fluiderhitzung, in die eine vom Abhitzekessel ausgehende Kesselableitung zur Zufuhr von aus dem Abhitzekessel austretenden Kühlgas mündet, vorhanden sind, kann dem aus dem Abhitzekessel über die Kesselableitung austretenden Gas in einer nachgeschalteten Vorrichtung zur Fluiderhitzung verbliebene Wärme entzogen werden. Beispielsweise kann so Heißwasser erzeugt oder Thermoöl erhitzt werden.

Wenn nur ein Abhitzekessel oder nur eine Vorrichtung zur Fluiderhitzung vorhanden ist, kann dem gesamten in dem vorderen Abschnitt durch die Schicht geblasenen und dabei erwärmten Kühlgas - oder zumindest einer Teilmenge des in dem vorderen Abschnitt durch die Schicht geblasenen und dabei erwärmten Kühlgases - Wärme entzogen werden in dem Abhitzekessel zur Erzeugung von Dampf und/oder in der Vorrichtung zur Fluiderhitzung, ohne dass einer Teilmenge des in dem vorderen Abschnitt durch die Schicht geblasenen und dabei erwärmten Kühlgases Wärme entzogen wird in einem Überhitzer zur Überhitzung von Dampf.

Vorzugsweise ist eine vom Abhitzekessel zum Überhitzer führende Dampfleitung vorhanden. Diese Dampfleitung ist geeignet, im Abhitzekessel erzeugten Dampf dem Überhitzer zuzuführen.

Vorzugsweise geht die Überhitzergasleitung von einem ersten Teilbereich des vorderen Abschnitts aus, wobei der erste Teilbereich dem aufgabebereichseitigen Ende des vorderen Abschnitts benachbart ist, und geht die Abhitzegasleitung von einem zweiten Teilbereich des vorderen Abschnitts aus, wobei der zweite Teilbereich zwischen dem ersten Teilbereich und dem abwurfseitigen Ende des vorderen Abschnitts liegt.

Vorzugsweise nimmt der erste Teilbereich 0 bis 50 % der Erstreckung des vorderen Abschnitts ein.
Vorzugsweise nimmt der zweite Teilbereich 50 % oder mehr der Erstreckung des vorderen Abschnitts ein.
Das betrifft die Erstreckung der Abschnitte von einem Aufgabebereich zu einem Abwurfbereich des Sinterkühlers.

Die Teilbereiche sind durch Trennvorrichtungen wie beispielsweise Trennwände voneinander abgegrenzt; die Trennvorrichtungen definieren die Grenzen, also Anfang und Ende, der Teilbereiche. Sie dienen der Leitung des in einem Teilbereich aus dem zu kühlenden Material austretenden Kühlgases nach oben bei weitgehender Vermeidung einer Vermischung mit Kühlgas aus einem seitlich benachbarten Teilbereich.
Vorzugsweise sind die Grenzen der Teilbereiche variabel einstellbar; beispielsweise sind die Trennvorrichtungen, beispielsweise Trennwände, variabel bezüglich ihrer Position. Das ist günstig, um beispielsweise verschiedenen Bedingungen wie Art und Temperatur des Sintermaterials oder Temperatur des Kühlgases entsprechend bezüglich des angestrebten Ausgleichs optimale Einstellungen vornehmen zu können. Das kann beispielsweise durch variabel einstellbare, beispielsweise verschiebbare, Trennvorrichtungen ermöglicht werden.

Ein weiterer Gegenstand der vorliegenden Anmeldung ist eine Steuer- und/oder Regeleinrichtung für eine Sinterkühleranlage, umfassend einen maschinenlesbaren Programmcode, der Steuer- und/oder Regelbefehle aufweist, welche bei deren Ausführung die Steuer- und/oder Regeleinrichtung zur Durchführung eines erfindungsgemäßen Verfahrens veranlassen.

Ein weiterer Gegenstand der vorliegenden Anmeldung ist eine Signalverarbeitungseinrichtung mit einem maschinenlesbaren Programmcode, der Steuerbefehle und/oder Regelbefehle zur Durchführung eines erfindungsgemäßen Verfahrens aufweist.

Ein weiterer Gegenstand der vorliegenden Anmeldung ist eine erfindungsgemäße Sinterkühleranlage umfassend eine derartige Steuer- und/oder Regeleinrichtung und/oder eine derartige Signalverarbeitungseinrichtung.

Ein weiterer Gegenstand der vorliegenden Anmeldung ist ein maschinenlesbarer Programmcode für eine solche Signalverarbeitungseinrichtung, wobei der Programmcode Steuerbefehle und/oder Regelbefehle aufweist, welche die Signalverarbeitungseinrichtung zur Durchführung eines erfindungsgemäßen Verfahrens veranlassen.

Ein weiterer Gegenstand der vorliegenden Anmeldung ist ein Speichermedium mit einem darauf gespeicherten maschinenlesbaren derartigen Programmcode.

### Kurze Beschreibung der Zeichnungen

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben. Dabei zeigen:
Fig. 1 eine schematische Darstellung einer erfindungsgemäßen Sinterkühleranlage mit erfindungsgemäßem Verfahrensablauf.
Fig. 2 und Fig. 3 andere Varianten in schematischer Darstellung.

### Beschreibung der Ausführungsformen

### Beispiele

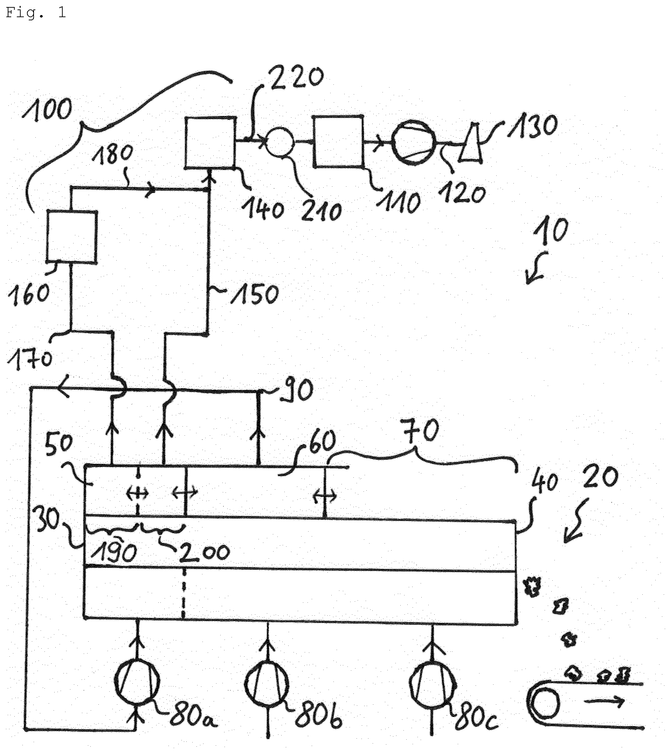

Figur 1 zeigt eine Sinterkühleranlage 10 mit einem Sinterkühler 20. Der Sinterkühler hat bezüglich seiner Erstreckung von einem Aufgabebereich 30 zu einem Abwurfbereich 40 einen vorderen Abschnitt 50, einen mittleren Abschnitt 60, und einen hinteren Abschnitt 70. Durchblasvorrichtungen 80a, 80b, 80c dienen zum Blasen von Kühlgas durch den Sinterkühler 20; der Volumenfluss des Kühlgases ist jeweils steuer- beziehungsweise regelbar, was jedoch nicht zwingend ist. Eine Vorrichtung zur Zuführung des durch den mittleren Abschnitt 60 des Sinterkühlers 20 geblasenen Kühlgases zum vorderen Abschnitt 50 des Sinterkühlers 20 ist durch Leitung 90 dargestellt; das dort geführte Kühlgas hat beispielsweise eine Temperatur in einem Bereich von 140 °C bis 200°C. Eine Vorrichtung zum Entzug von Wärme 100 aus durch den vorderen Abschnitt 50 geblasenem Kühlgas ist ebenso vorhanden wie eine Vorrichtung zur Verminderung der Staubfracht 110 von aus der Vorrichtung zum Entzug von Wärme 100 austretendem Kühlgas; vom Sinterkühler beziehungsweise von der Vorrichtung zum Entzug von Wärme 100 sind zwecks Anlieferung der zu behandelnden Gase entsprechende Gasleitungen vorgesehen. Von der Vorrichtung zur Verminderung der Staubfracht 110 wird dort entstaubtes Kühlgas 120 einem Kamin 130 zugeführt zwecks Entlassung in die Umwelt.

Die dargestellte Sinterkühleranlage 10 wird erfindungsgemäß betrieben. Es wird also eine Schicht von Sintermaterial auf dem Sinterkühler 20 mittels Durchblasens von Kühlgas gekühlt. Kühlgas, das in einem Abschnitt des Sinterkühlers 20 bereits durch das Sintermaterial geblasen wurde, wird einem anderen Abschnitt des Sinterkühlers 20 als rezirkuliertes Kühlgas zugeführt. Das rezirkulierte Kühlgas stammt aus dem mittleren Abschnitt 60 des Sinterkühlers 20 und wird dem vorderen Abschnitt 50 des Sinterkühlers 20 als Kühlgas zugeführt. Dem im vorderen Abschnitt 50 durch die Schicht geblasenem und dabei erwärmtem Kühlgas wird Wärme entzogen und danach seine Staubfracht vermindert. In dem hinteren Abschnitt 70 des Sinterkühlers durch die Schicht geblasenes Kühlgas wird direkt - also ohne Entstaubung und ohne Entzug von Wärme - in die Umwelt entlassen.
Es ist schematisch dargestellt, wie gekühltes Sintermaterial im Abwurfbereich auf ein Förderband abgeworfen wird.

Die Grenzen der Abschnitte sind variabel einstellbar, was durch Doppelpfeile skizziert ist.

Die Vorrichtung zum Entzug von Wärme 100 aus durch den vorderen Abschnitt 50 geblasenem Kühlgas umfasst im dargestellten Beispiel
- einen Abhitzekessel 140, in den eine vom vorderen Abschnitt ausgehende Abhitzegasleitung 150 zur Zufuhr von durch den vorderen Abschnitt 50 geblasenem Kühlgas mündet,
   und
- einen Überhitzer 160, in den eine vom vorderen Abschnitt ausgehende Überhitzergasleitung 170 zur Zufuhr von durch den vorderen Abschnitt 50 geblasenem Kühlgas mündet.

Nach einer nicht extra dargestellten Variante, wird über eine entsprechende Dampfleitung Dampf aus dem Abhitzekessel dem Überhitzer zugeführt werden und dort überhitzt werden.
Durch die Überhitzergasleitung 170 wird eine erste, aus einem ersten Teilbereich 190 des vorderen Abschnitts 50 stammende, Teilmenge des im vorderen Abschnitt 50 durch die Schicht geblasenen und dabei erwärmten Kühlgases dem Überhitzer 160 zugeführt. Durch die Abhitzegasleitung 150 wird eine zweite, aus einem zweiten Teilbereich 200 des vorderen Abschnitts 50 stammende, Teilmenge des im vorderen Abschnitt 50 durch die Schicht geblasenen und dabei erwärmten Kühlgases dem Verdampferteil des Abhitzekessels 140 zugeführt.
Dargestellt ist auch, dass eine vom Überhitzer 160 ausgehende Überhitzerableitung 180 vorgesehen ist, die in die vom vorderen Abschnitt ausgehende Abhitzegasleitung 150 mündet; somit kann nach der Überhitzung in der ersten Teilmenge verbliebene Wärme im Abhitzekessel genutzt werden.
Im dargestellten Beispiel liegt der zweite Teilbereich 200 zwischen dem ersten Teilbereich 190 und dem abwurfseitigen Ende des vorderen Abschnitts 50, wobei der erste Teilbereich 190 dem aufgabebereichseitigen Ende des vorderen Abschnitts 5 benachbart ist. Die Grenzen der Teilbereiche sind variabel einstellbar, was durch einen Doppelpfeil skizziert ist.

Anstelle des Abhitzekessels 140 könnte auch ein Heißwassererzeuger vorhanden sein; zu diesem würde dann eine analog zur Abhitzegasleitung verlaufende Fluiderhitzergasleitung münden.

Optional ist dem Abhitzekessel 140 nachgeschaltet eine Vorrichtung zur Fluiderhitzung 210, hier ein Heißwassererzeuger, vorhanden, um dem aus dem Abhitzekessel austretenden Gas verbliebene Wärme zu entziehen. Der Heißwassererzeuger ist in der vom Abhitzekessel 140 ausgehenden Kesselableitung 220 zur Zufuhr von aus dem Abhitzekessel austretenden Kühlgas angeordnet.

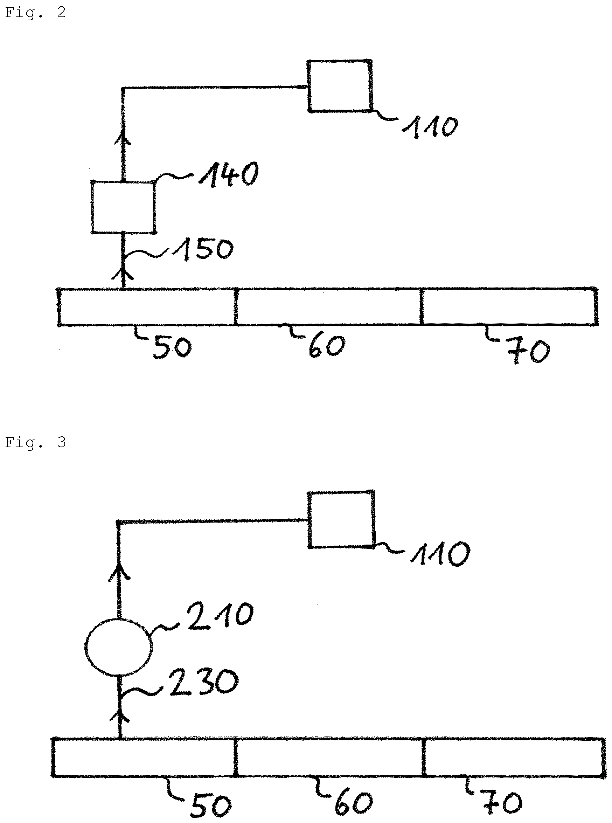

Figur 2 zeigt unter Verwendung derselben Bezugszeichen wie in Figur 1 schematisch eine Ausführungsform mit vorderem Abschnitt 50, mittlerem Abschnitt 60 und hinterem Abschnitt 70 eines Sinterkühlers. Über die Abhitzegasleitung 150 wird das gesamte in dem vorderen Abschnitt durch die Schicht geblasenen und dabei erwärmte Kühlgas dem Abhitzekessel 140 zugeführt werden, ohne dass - im Unterschied zu Figur 1 - einer Teilmenge des in dem vorderen Abschnitt durch die Schicht geblasenen und dabei erwärmten Kühlgases in einem Überhitzer zur Überhitzung von Dampf Wärme entzogen wird. Analog zu Figur 1 könnte dem Abhitzekessel 140 nachgeschaltet eine Vorrichtung zur Fluiderhitzung vorhanden sein.

Figur 3 zeigt unter Verwendung derselben Bezugszeichen wie in Figur 2 schematisch eine Ausführungsform mit vorderem Abschnitt 50, mittlerem Abschnitt 60 und hinterem Abschnitt 70 eines Sinterkühlers. Über die zur Abhitzegasleitung 150 der Figur 2 analoge Fluiderhitzergasleitung 230 wird das gesamte in dem vorderen Abschnitt durch die Schicht geblasenen und dabei erwärmte Kühlgas dem Fluiderhitzer 210, hier ein Heißwassererzeuger, zugeführt.

### Liste der Bezugszeichen

- 10: Sinterkühleranlage
- 20: Sinterkühler
- 30: Aufgabebereich
- 40: Abwurfbereich
- 50: vorderer Abschnitt
- 60: mittlerer Abschnitt
- 70: hinterer Abschnitt
- 80a, 80b, 80c: Durchblasvorrichtungen
- 90: Leitung
- 100: Vorrichtung zum Entzug von Wärme
- 110: Vorrichtung zur Verminderung der Staubfracht
- 120: entstaubtes Kühlgas
- 130: Kamin
- 140: Abhitzekessel
- 150: Abhitzegasleitung
- 160: Überhitzer
- 170: Überhitzergasleitung
- 180: Überhitzerableitung
- 190: erster Teilbereich des vorderen Abschnitts
- 200: zweiter Teilbereich des vorderen Abschnitts
- 210: Vorrichtung zur Fluiderhitzung
- 220: Kesselableitung
- 230: Fluiderhitzergasleitung

## Patentansprüche

1. Verfahren zum Betrieb
eines Sinterkühlers (20) mit einem vorderen Abschnitt (50), einem hinteren Abschnitt (70) und einem mittleren Abschnitt (60), auf dem eine Schicht von Sintermaterial mittels Durchblasens von Kühlgas gekühlt wird,
und Kühlgas, das in einem Abschnitt des Sinterkühlers (20) bereits durch das Sintermaterial geblasen wurde, zumindest teilweise einem anderen Abschnitt des Sinterkühlers (20) als rezirkuliertes Kühlgas zugeführt wird,
**dadurch gekennzeichnet, dass**
das rezirkulierte Kühlgas aus dem mittleren Abschnitt (60) des Sinterkühlers (20) stammt,
das rezirkulierte Kühlgas dem vorderen Abschnitt (50) des Sinterkühlers (20) als Kühlgas zugeführt wird,
und zumindest einer Teilmenge des in dem vorderen Abschnitt (50) durch die Schicht geblasenem und dabei erwärmtem Kühlgases Wärme entzogen wird und danach seine Staubfracht vermindert wird.

2. Verfahren nach Anspruch 1, **dadurch gekennzeichnet, dass** das in dem hinteren Abschnitt (70) des Sinterkühlers (20) durch die Schicht geblasenes Kühlgas zumindest teilweise direkt in die Umwelt entlassen wird.

3. Verfahren nach Anspruch 1 oder 2, **dadurch gekennzeichnet, dass** der mittlere Abschnitt (60) innerhalb eines Bereiches von 20 bis 50 %, bevorzugt von 30 bis 40 %, der Erstreckung des Sinterkühlers (20) von einem Aufgabebereich (30) zu einem Abwurfbereich (40) beginnt, und innerhalb eines Bereiches von 40 bis 80 %, bevorzugt von 50 bis 70 %, der Erstreckung des Sinterkühlers (20) von einem Aufgabebereich (30) zu einem Abwurfbereich (40) endet.

4. Verfahren nach einem der Ansprüche 1 bis 3, **dadurch gekennzeichnet, dass** der vordere Abschnitt innerhalb eines Bereiches von 0 bis 25 %, bevorzugt von 0 bis 15 %, der Erstreckung des Sinterkühlers (20) von einem Aufgabebereich (30) zu einem Abwurfbereich (40) beginnt, und innerhalb eines Bereiches von 20 bis 50 %, bevorzugt von 30 bis 40 %, der Erstreckung des Sinterkühlers von einem Aufgabebereich (30) zu einem Abwurfbereich (40) endet.

5. Verfahren nach einem der Ansprüche 1 bis 4, **dadurch gekennzeichnet, dass** der hintere Abschnitt (70) innerhalb eines Bereiches von 40 bis 80 %, bevorzugt von 50 bis 70 %, der Erstreckung des Sinterkühlers (20) von einem Aufgabebereich (30) zu einem Abwurfbereich (40) beginnt, und innerhalb eines Bereiches von 90 bis 100 %, bevorzugt bei 100 %, der Erstreckung des Sinterkühlers (20) von einem Aufgabebereich (30) zu einem Abwurfbereich (40) endet.

6. Verfahren nach einem der Ansprüche 1 bis 5, **dadurch gekennzeichnet, dass** einer ersten Teilmenge des in dem vorderen Abschnitt (50) durch die Schicht geblasenen und dabei erwärmten Kühlgases Wärme entzogen wird in einem Überhitzer (160) zur Überhitzung von Dampf, und einer zweiten Teilmenge des in dem vorderen Abschnitt durch die Schicht geblasenen und dabei erwärmten Kühlgases Wärme entzogen in einem Abhitzekessel (140) zur Erzeugung von Dampf und/oder in einer Vorrichtung zur Fluiderhitzung (210).

7. Verfahren nach Anspruch 6, **dadurch gekennzeichnet, dass** die erste Teilmenge aus einem ersten Teilbereich (190) des vorderen Abschnitts (50) stammt, wobei der erste Teilbereich (190) dem aufgabebereichseitigen Ende des vorderen Abschnitts (50) benachbart ist, und die zweite Teilmenge aus einem zweiten Teilbereich (200) des vorderen Abschnitts (50) stammt, wobei der zweite Teilbereich (200) zwischen dem ersten Teilbereich (190) und dem abwurfseitigen Ende des vorderen Abschnitts (50) liegt.

8. Sinterkühleranlage (10), umfassend
- einen Sinterkühler (20) mit Durchblasvorrichtungen (80a,80b,80c) für Kühlgas, wobei der Sinterkühler (20) einen vorderen Abschnitt (50), einen mittleren Abschnitt (60), und einen hinteren Abschnitt (70) aufweist,
- zumindest eine Vorrichtung zur Zuführung von durch den mittleren Abschnitt (60) des Sinterkühlers (20) geblasenem Kühlgas zum vorderen Abschnitt (50) des Sinterkühlers (20),
**dadurch gekennzeichnet, dass**
die Sinterkühleranlage (10) auch umfasst
- zumindest eine Vorrichtung zum Entzug von Wärme (100) aus durch den vorderen Abschnitt (50) geblasenem Kühlgas,
- zumindest eine Vorrichtung zur Verminderung der Staubfracht (110) von aus der Vorrichtung zum Entzug von Wärme (100) austretendem Kühlgas.

9. Sinterkühleranlage (10) nach Anspruch 8, **dadurch gekennzeichnet, dass** der mittlere Abschnitt (60) innerhalb eines Bereiches von 20 bis 50 %, bevorzugt von 30 bis 40 %, der Erstreckung des Sinterkühlers (20) von einem Aufgabebereich (30) zu einem Abwurfbereich (40) beginnt, und innerhalb eines Bereiches von 40 bis 80 %, bevorzugt von 50 bis 70 %, der Erstreckung des Sinterkühlers (20) von einem Aufgabebereich (30) zu einem Abwurfbereich (40) endet.

10. Sinterkühleranlage nach einem der Ansprüche 8 bis 9, **dadurch gekennzeichnet, dass** der vordere Abschnitt (50) innerhalb eines Bereiches von 0 bis 25 %, bevorzugt von 0 bis 15 %, der Erstreckung des Sinterkühlers (20) von einem Aufgabebereich (30) zu einem Abwurfbereich (40) beginnt, und innerhalb eines Bereiches von 20 bis 50 %, bevorzugt von 30 bis 40 %, der Erstreckung des Sinterkühlers (20) von einem Aufgabebereich (30) zu einem Abwurfbereich (40) endet.

11. Sinterkühleranlage nach einem der Ansprüche 8 bis 10, **dadurch gekennzeichnet, dass** der hintere Abschnitt (70) innerhalb eines Bereiches von 40 bis 80 %, bevorzugt von 50 bis 70 %, der Erstreckung des Sinterkühlers (20) von einem Aufgabebereich (30) zu einem Abwurfbereich (40) beginnt, und innerhalb eines Bereiches von 90 bis 100 %, bevorzugt bei 100 %, der Erstreckung des Sinterkühlers (20) von einem Aufgabebereich (30) zu einem Abwurfbereich (40) endet.

12. Sinterkühleranlage (10) nach einem der Ansprüche 8 bis 11, **dadurch gekennzeichnet, dass** die Grenzen der Abschnitte variabel einstellbar sind.

13. Sinterkühleranlage nach einem der Ansprüche 8 bis 12, **dadurch gekennzeichnet, dass** die Vorrichtung zum Entzug von Wärme (100) aus durch den vorderen Abschnitt geblasenem Kühlgas umfasst:
- einen Abhitzekessel (140), in den eine vom vorderen Abschnitt (50) ausgehende Abhitzegasleitung (150) zur Zufuhr von durch den vorderen Abschnitt (50) geblasenem Kühlgas mündet,
und/oder
- eine Vorrichtung zur Fluiderhitzung (210), in die eine vom vorderen Abschnitt (50) ausgehende Fluiderhitzergasleitung (230) zur Zufuhr von durch den vorderen Abschnitt (50) geblasenem Kühlgas und/oder in die eine vom Abhitzekessel (140) ausgehende Kesselableitung (220) zur Zufuhr von aus dem Abhitzekessel (140) austretenden Kühlgas mündet,
und/oder
- einen Überhitzer (160), in den eine vom vorderen Abschnitt (50) ausgehende Überhitzergasleitung (170) zur Zufuhr von durch den vorderen Abschnitt (50) geblasenem Kühlgas mündet.

14. Sinterkühleranlage (10) nach einem der Ansprüche 8 bis 13, **dadurch gekennzeichnet, dass** die Überhitzergasleitung (170) von einem ersten Teilbereich (190) des vorderen Abschnitts (50) ausgeht, wobei der erste Teilbereich (190) dem aufgabebereichseitigen Ende des vorderen Abschnitts (50) benachbart ist, und die Abhitzegasleitung (150) von einem zweiten Teilbereich (200) des vorderen Abschnitts (50) ausgeht, wobei der zweite Teilbereich (200) zwischen dem ersten Teilbereich (190) und dem abwurfseitigen Ende des vorderen Abschnitts (50) liegt.

15. Sinterkühleranlage (10) nach einem der Ansprüche 8 bis 14, **dadurch gekennzeichnet, dass** die Grenzen der Teilbereiche variabel einstellbar sind.
